# EUROPÄISCHE PATENTSCHRIFT

(11) **EP 2 680 993 B1**
(45) Veröffentlichungstag und Bekanntmachung des Hinweises auf die Patenterteilung: **14.10.2015**
(21) Anmeldenummer: 12710027.9
(22) Anmeldetag: 02.03.2012
(51) Int. Cl.: B23D 57/02, B27B 17/00, B28D 1/08

(54) **WERKZEUGMASCHINENSYSTEM**
POWER TOOL SYSTEM
SYSTÈME DE MACHINE-OUTIL

(30) Priorität: 03.03.2011 DE 102011005019
(43) Veröffentlichungstag der Anmeldung: 08.01.2014
(73) Patentinhaber: Robert Bosch GmbH, 70469 Stuttgart (DE)
(72) Erfinder: FUCHS, Rudolf, 73765 Neuhausen (DE)
(86) Internationale Anmeldenummer: PCT/EP2012/000938
(87) Internationale Veröffentlichungsnummer: WO 2012/116833

(56) Entgegenhaltungen:
- DE-A1- 2 734 532
- DE-A1- 3 438 361
- DE-C- 690 791
- DE-C- 879 969
- DE-U1-202009 014 060
- FR-A1- 2 610 563
- FR-A1- 2 711 180
- GB-A- 2 042 974
- US-A- 2 800 153
- US-A- 4 757 735
- US-A- 4 779 503
- US-A- 4 981 129

## Beschreibung

### Stand der Technik

Es sind bereits Werkzeugmaschinensysteme bekannt, die eine Werkzeugmaschine, insbesondere eine Kappsäge, und eine Werkzeugmaschinentrennvorrichtung aufweisen. Die Werkzeugmaschine umfasst hierbei eine Werkstückauflageeinheit zur Auflage eines Werkstücks während einer Bearbeitung und eine beweglich gelagerte Werkzeugführungseinheit, an der die Werkzeugmaschinentrennvorrichtung in einem montierten Zustand angeordnet ist.

### Offenbarung der Erfindung

Die Erfindung geht aus von einem Werkzeugmaschinensystem gemäß dem Oberbegriff des Patentanspruchs 1, mit zumindest einer Werkzeugmaschine, insbesondere einer Kappsäge, die zumindest eine Werkstückauflageeinheit zur Auflage eines Werkstücks während einer Bearbeitung und zumindest eine beweglich gelagerte Werkzeugführungseinheit aufweist, und mit zumindest einer in einem montierten Zustand an der Werkzeugführungseinheit angeordneten Werkzeugmaschinentrennvorrichtung. Ein derartiges Werkzeugmaschinensystem geht beispielsweise aus der DE 690 791 C hervor.

Die Erfindung sieht ein Werkzeugmaschinensystem gemäß dem Patentanspruch 1 vor.

Es wird vorgeschlagen, dass die Werkzeugmaschinentrennvorrichtung zumindest einen Schneidstrang und zumindest eine Führungseinheit zur Führung des Schneidstrangs aufweist. Die Werkzeugmaschine weist insbesondere eine Masse auf, die kleiner ist als 60 kg, bevorzugt kleiner als 40 kg und besonders bevorzugt kleiner als 30 kg. Vorzugsweise ist die Werkzeugmaschine als stationäre Werkzeugmaschine ausgebildet, die von einem Bediener transportmaschinenlos transportiert werden kann. Unter einer "Werkstückaufiageeinheit" soll hier insbesondere eine Einheit verstanden werden, die dazu vorgesehen ist, ein Werkstück zu einer Bearbeitung bei einer ordnungsgemäßen Handhabung der Werkzeugmaschine aufzunehmen und die zumindest ein Anschlagelement, insbesondere eine Anschlagschiene, aufweist, an der das Werkstück zu einer Erzielung eines präzisen Schnitts bei einer Bearbeitung angelegt werden kann. Insbesondere wird ein Werkstück zu einer Bearbeitung mittels der Werkzeugmaschine auf die Werkstückauflageeinheit aufgelegt und/oder aufgespannt. Besonders bevorzugt wird die Werkstückauflageeinheit von einem Werkzeugmaschinentisch, insbesondere von einer Werkzeugmaschinentischplatte, gebildet. Hierbei ist die Werkstückauflageeinheit insbesondere aus Aluminium gebildet. Es ist jedoch auch denkbar, dass die Werkstückauflageeinheit aus einem anderen, einem Fachmann als sinnvoll erscheinenden Werkstoff ausgebildet ist, wie beispielsweise Kunststoff usw.

Der Ausdruck "beweglich gelagert" soll hier insbesondere eine Lagerung der Werkzeugführungseinheit an der Werkzeugmaschine definieren, wobei die Werkzeugführungseinheit, insbesondere entkoppelt von einer elastischen Verformung der Werkzeugführungseinheit, eine Bewegungsmöglichkeit entlang zumindest einer Strecke größer als 10 mm, bevorzugt größer als 50 mm und besonders bevorzugt größer als 100 mm aufweist und/oder eine Bewegungsmöglichkeit um zumindest eine Achse um einen Winkel größer als 10°, bevorzugt größer als 45° und besonders bevorzugt größer als 60° aufweist. Unter einer "Werkzeugführungseinheit" soll hier insbesondere eine Einheit verstanden werden, die dazu vorgesehen ist, zumindest die Werkzeugmaschinentrennvorrichtung zu einer Bearbeitung eines Werkstücks beweglich zu lagern und/oder zu führen. Besonders bevorzugt umfasst die Werkzeugführungseinheit zumindest eine Kopplungsvorrichtung, die dazu vorgesehen ist, die Werkzeugmaschinentrennvorrichtung formschlüssig und/oder kraftschlüssig zu koppeln. Insbesondere wird der Schneidstrang zusammen mit der Führungseinheit der Werkzeugmaschinentrennvorrichtung mittels der Werkzeugführungseinheit geführt. Die Werkzeugführungseinheit ist linear beweglich entlang zumindest einer Achse und/oder zusätzlich schwenkbar um zumindest eine weitere Achse gelagert. Besonders bevorzugt verläuft eine Schwenkachse hierbei zumindest im Wesentlichen parallel zu einer Auflagefläche der Werkstückauflageeinheit. Die Werkzeugführungseinheit ist zusätzlich um eine Schwenkachse schwenkbar, die zumindest im Wesentlichen senkrecht zur Auflagefläche der Werkstückauflageeinheit verläuft. Der Ausdruck "im Wesentlichen senkrecht" soll hier insbesondere eine Ausrichtung einer Richtung relativ zu einer Bezugsrichtung definieren, wobei die Richtung und die Bezugsrichtung, insbesondere in einer Ebene betrachtet, einen Winkel von 90° einschließen und der Winkel eine maximale Abweichung von insbesondere kleiner als 8°, vorteilhaft kleiner als 5° und besonders vorteilhaft kleiner als 2° aufweist.

Unter einem "Schneidstrangs" soll hier insbesondere eine Einheit verstanden werden, die dazu vorgesehen ist, einen atomaren Zusammenhalt eines zu bearbeitenden Werkstücks örtlich aufzuheben, insbesondere mittels eines mechanischen Abtrennens und/oder mittels eines mechanischen Abtragens von Werkstoffteilchen des Werkstücks. Bevorzugt ist der Schneidstrang dazu vorgesehen, das Werkstück in zumindest zwei physikalisch voneinander getrennte Teile zu separieren und/oder zumindest teilweise Werkstoffteilchen des Werkstücks ausgehend von einer Oberfläche des Werkstücks abzutrennen und/oder abzutragen. Besonders bevorzugt wird der Schneidstrang in zumindest einem Betriebszustand umlaufend bewegt, insbesondere entlang eines Umfangs der Führungseinheit. Unter einer "Führungseinheit" soll hier insbesondere eine Einheit verstanden werden, die dazu vorgesehen ist, eine Zwangskraft zumindest entlang einer Richtung senkrecht zu einer Schneidrichtung des Schneidstrangs auf den Schneidstrang auszuüben, um eine Bewegungsmöglichkeit des Schneidstrangs entlang der Schneidrichtung vorzugeben. Bevorzugt weist die Führungseinheit zumindest ein Führungselement auf, insbesondere eine Führungsnut, durch das der Schneidstrang geführt wird. Bevorzugt ist der Schneidstrang, in einer Schneidebene betrachtet, entlang eines gesamten Umfangs der Führungseinheit durch die Führungseinheit mittels des Führungselements, insbesondere der Führungsnut, geführt. Vorzugsweise ist die Führungseinheit als Schwert ausgebildet. Der Begriff "Schwert" soll hier insbesondere eine geometrische Form definieren, die, in der Schneidebene betrachtet, eine in sich geschlossene Außenkontur aufweist, die zumindest zwei zueinander parallel verlaufende Geraden und zumindest zwei jeweils sich zugewandte Enden der Geraden miteinander verbindende Verbindungsabschnitte, insbesondere Kreisbögen, umfasst. Somit weist die Führungseinheit eine geometrische Form auf, die sich, in der Schneidebene betrachtet, aus einem Rechteck und zumindest zwei an sich gegenüberliegenden Seiten des Rechtecks angeordneten Kreissektoren zusammensetzt.

Der Begriff "Schneidebene" soll hier insbesondere eine Ebene definieren, in der der Schneidstrang in zumindest einem Betriebszustand entlang eines Umfangs der Führungseinheit in zumindest zwei zueinander entgegengesetzt gerichtete Schneidrichtungen relativ zur Führungseinheit bewegt wird. Bevorzugt ist die Schneidebene bei einer Bearbeitung eines Werkstücks zumindest im Wesentlichen quer zu einer bearbeitenden Werkstückoberfläche ausgerichtet. Unter "zumindest im Wesentlichen quer" soll hier insbesondere eine Ausrichtung einer Ebene und/oder einer Richtung relativ zu einer weiteren Ebene und/oder einer weiteren Richtung verstanden werden, die bevorzugt von einer parallelen Ausrichtung der Ebene und/oder der Richtung relativ zu der weiteren Ebene und/oder der weiteren Richtung abweicht. Es ist jedoch auch denkbar, dass die Schneidebene bei einer Bearbeitung eines Werkstücks zumindest im Wesentlichen parallel zu einer bearbeitenden Werkstückoberfläche ausgerichtet ist, insbesondere bei einer Ausbildung des Schneidstrangs als Schleifmittel usw.

Unter "zumindest im Wesentlichen parallel" soll hier insbesondere eine Ausrichtung einer Richtung relativ zu einer Bezugsrichtung, insbesondere in einer Ebene, verstanden werden, wobei die Richtung gegenüber der Bezugsrichtung eine Abweichung insbesondere kleiner als 8°, vorteilhaft kleiner als 5° und besonders vorteilhaft kleiner als 2° aufweist. Unter einer "Schneidrichtung" soll hier insbesondere eine Richtung verstanden werden, entlang der der Schneidstrang zur Erzeugung eines Schneidspalts und/oder zur Abtrennung und/oder zur Abtragung von Werkstoffteilchen eines zu bearbeitenden Werkstücks in zumindest einem Betriebszustand infolge einer Antriebskraft und/oder eines Antriebsmoments, insbesondere in der Führungseinheit, bewegt wird. Bevorzugt wird der Schneidstrang in einem Betriebszustand entlang der Schneidrichtung relativ zur Führungseinheit bewegt.

Der Schneidstrang und die Führungseinheit bilden vorzugsweise zusammen ein geschlossenes System. Der Begriff "geschlossenes System" soll hier insbesondere ein System definieren, das zumindest zwei Komponenten umfasst, die mittels eines Zusammenwirkens in einem demontierten Zustand des Systems von einem dem System übergeordneten System, wie beispielsweise einer Werkzeugmaschine, eine Funktionalität beibehalten und/oder die im demontierten Zustand unverlierbar miteinander verbunden sind. Bevorzugt sind die zumindest zwei Komponenten des geschlossenen Systems für einen Bediener zumindest im Wesentlichen unlösbar miteinander verbunden. Unter "zumindest im Wesentlichen unlösbar" soll hier insbesondere eine Verbindung von zumindest zwei Bauteilen verstanden werden, die lediglich unter der Zuhilfenahme von Trennwerkzeugen, wie beispielsweise einer Säge, insbesondere einer mechanischen Säge usw., und/oder chemischen Trennmitteln, wie beispielsweise Lösungsmittel usw., voneinander trennbar sind. Mittels der erfindungsgemäßen Ausgestaltung des Werkzeugmaschinensystems kann vorteilhaft eine kompakte Werkzeugmaschine erreicht werden.

Des Weiteren wird vorgeschlagen, dass die Werkzeugmaschinentrennvorrichtung in zumindest einem Betriebszustand zumindest im Wesentlichen parallel zu einer Auflagefläche der Werkstückauflageeinheit verschiebbar gelagert ist. Besonders bevorzugt ist die Werkzeugmaschinentrennvorrichtung, in zumindest einem Betriebszustand infolge einer formschlüssigen und/oder kraftschlüssigen Verbindung mit der Kopplungsvorrichtung der Werkzeugführungseinheit zusammen mit der Werkzeugführungseinheit zumindest im Wesentlichen parallel zu einer Auflagefläche der Werkstückauflageeinheit verschiebbar gelagert. Somit kann vorteilhaft die Werkzeugmaschinentrennvorrichtung zu einer Einbringung eines Schnitts in ein zu bearbeitendes Werkstück relativ zum Werkstück bewegt werden, das beispielsweise an Anschlagelementen der Werkstückauflageeinheit anliegt. Es können somit präzise Schnitte in ein zu bearbeitendes Werkstück eingebracht werden.

Die Werkzeugmaschinentrennvorrichtung ist in zumindest einem Betriebszustand relativ zur Werkstückauflageeinheit schwenkbar gelagert. Besonders bevorzugt ist die Werkzeugmaschinentrennvorrichtung in zumindest einem Betriebszustand infolge einer formschlüssigen und/oder kraftschlüssigen Verbindung mit der Kopplungsvorrichtung der Werkzeugführungseinheit zusammen mit der Werkzeugführungseinheit relativ zur Werkstückauflageeinheit schwenkbar gelagert. Insbesondere ist die Werkzeugmaschinentrennvorrichtung zusammen mit der Werkzeugführungseinheit um eine parallel zur Auflagefläche verlaufende Schwenkachse schwenkbar gelagert. Die Werkzeugmaschinentrennvorrichtung ist zusammen mit der Werkzeugführungseinheit zusätzlich um eine zumindest im Wesentlichen senkrecht zur Auflagefläche verlaufende weitere Schwenkachse relativ zu einem Teilbereich der Werkstückauflageeinheit schwenkbar gelagert. Somit kann vorteilhaft eine hohe Variabilität der Werkzeugmaschine zu einem Einbringen von Schnitten in ein zu bearbeitendes Werstück erreicht werden. Es können vorteilhaft Einstichschnitte mittels des erfindungsgemäßen Werkzeugmaschinensystems in ein zu bearbeitendes Werkstück eingebracht werden.

Ferner wird vorgeschlagen, dass die Werkzeugmaschinentrennvorrichtung relativ zur Werkzeugführungseinheit schwenkbar gelagert ist. Besonders bevorzugt verläuft eine Schwenkachse, um die die Werkzeugmaschinentrennvorrichtung relativ zur Werkzeugführungseinheit schwenkbar gelagert ist, zumindest im Wesentlichen senkrecht zu einer Längsachse der Werkzeugführungseinheit. Es ist jedoch auch denkbar, dass die Werkzeugmaschinentrennvorrichtung um eine zumindest im Wesentlichen koaxial zur Längsachse der Werkzeugführungseinheit verlaufende Schwenkachse schwenkbar gelagert ist. Mittels der erfindungsgemäßen Ausgestaltung kann vorteilhaft eine hohe Flexibilität bei einer Bearbeitung eines Werkstücks mittels des erfindungsgemäßen Werkzeugmaschinensystems erreicht werden, insbesondere bezogen auf Einstellmöglichkeiten einer Position der Werkzeugmaschinentrennvorrichtung zur Bearbeitung eines Werkstücks.

Vorzugsweise umfasst das Werkzeugmaschinensystem eine weitere Werkzeugmaschinentrennvorrichtung, die zumindest einen Schneidstrang und zumindest eine Führungseinheit zur Führung des Schneidstrangs aufweist. Bevorzugt sind die beiden Werkzeugmaschinentrennvorrichtungen in zwei zueinander parallel versetzten Schneidebenen angeordnet. Es ist jedoch auch denkbar, dass die beiden Werkzeugmaschinentrennvorrichtungen in einer gemeinsamen Schneidebene angeordnet sind. Mittels der weiteren Werkzeugmaschinentrennvorrichtung können vorteilhaft in einem Arbeitsgang nutförmige Schnitte in ein zu bearbeitendes Werkstück eingebracht werden.

Zudem wird vorgeschlagen, dass die Werkzeugmaschinentrennvorichtungen gegenläufig mittels einer Antriebseinheit der Werkzeugmaschine antreibbar sind. Der Begriff "Antriebseinheit" soll hier insbesondere eine Einheit definieren, die dazu vorgesehen ist, Kräfte und/oder Drehmomente zu einem Antrieb zumindest einer der Werkzeugmaschinentrennvorrichtungen zu erzeugen. Bevorzugt wird zur Erzeugung von Kräften und/oder Drehmomenten mittels der Antriebseinheit thermische Energie, chemische Energie und/oder elektrische Energie in Bewegungsenergie umgewandelt. Besonders bevorzugt umfasst die Antriebseinheit zumindest einen Rotor, der zumindest eine Ankerwelle aufweist, und zumindest einen Stator. Vorzugsweise ist die Antriebseinheit als Elektromotoreinheit ausgebildet. Es ist jedoch auch denkbar, dass die Antriebseinheit eine andere, einem Fachmann als sinnvoll erscheinende Ausgestaltung aufweist. Der Begriff "gegenläufig" soll hier insbesondere zwei zueinander, entgegengesetzte Verläufe von Schneidrichtungen definieren, wobei eine der Schneidrichtungen in einem Uhrzeigersinn entlang eines Umfangs der entsprechenden Führungseinheit verläuft und eine der beiden Schneidrichtungen entgegen einem Uhrzeigersinn entlang eines Umfangs der entsprechenden Führungseinheit verläuft, insbesondere betrachtet von einem Fixpunkt aus, der auf einer senkrecht zumindest zu einer der Schneidebenen verlaufenden Geraden liegt. Es kann vorteilhaft ein Sägen mittels des Werkzeugmaschinensystems ermöglicht werden, bei dem geringe Reaktionskräfte auftreten.

Vorteilhafterweise ist die Werkstückauflageeinheit zumindest auf einer Seite ausziehbar ausgebildet. Der Begriff "ausziehbar" soll hier insbesondere eine bewegliche Lagerung zumindest eines Teilbereichs der Werkstückauflageeinheit zumindest relativ zu einem weiteren Teilbereich der Werkstückauflageeinheit definieren. Somit kann vorteilhaft die Auflagefläche an eine Abmessung eines zu bearbeitenden Werkstücks angepasst werden.

In den Ausführungsbeispielen wird eine Werkzeugmaschinentrennvorrichtung für ein erfindungsgemäßes Werkzeugmaschinensystem beschrieben. Die Werkzeugmaschinentrennvorrichtung umfasst zumindest einen Schneidstrang und zumindest eine Führungseinheit. Es kann vorteilhaft ein vielseitig einsetzbares Werkzeug zur Bearbeitung von Werkstücken erreicht werden.

Vorteilhafterweise umfasst die Werkzeugmäschinentrennvorrichtung ein Drehmomentübertragungselement, das zumindest teilweise in der Führungseinheit gelagert ist. Bevorzugt ist das Drehmomentübertragungselement zumindest teilweise entlang zumindest einer Richtung von Außenwänden der Führungseinheit umgeben. Bevorzugt weist das Drehmomentübertragungselement eine konzentrische Kopplungsausnehmung auf, in die ein Ritzel der Motoreinheit und/oder ein Zahnrad und/oder eine verzahnte Welle der Getriebeeinheit in einem montierten Zustand eingreifen kann. Die Kopplungsausnehmung wird hierbei bevorzugt von einem Innensechskant gebildet. Es ist jedoch auch denkbar, dass die Kopplungsausnehmung eine andere, einem Fachmann als sinnvoll erscheinende Ausgestaltung aufweist. Mittels der Ausgestaltung der Werkzeugmaschinentrennvorrichtung kann konstruktiv einfach ein geschlossenes System erreicht werden, das komfortabel von einem Bediener an einer dazu vorgesehenen Werkzeugmaschine montierbar ist. Es kann somit vorteilhaft auf eine Einzelmontage von Komponenten, wie beispielsweise des Schneidstrangs, der Führungseinheit und des Drehmomentübertragungselements, durch den Bediener zum Gebrauch der Werkzeugmaschinentrennvorrichtung verzichtet werden.

In den Ausführungsbeispielen wird eine Werkzeugmaschine für ein erfindungsgemäßes Werkzeugmaschinensystem beschrieben, mit zumindest einer Werkstückauflageeinheit zur Auflage eines Werkstücks während einer Bearbeitung und mit zumindest einer Kopplungsvorrichtung zur Kopplung mit einer Werkzeugmaschinentrennvorrichtung. Unter einer "Kopplungsvorrichtung" soll hier insbesondere eine Vorrichtung verstanden werden, die dazu vorgesehen ist, die Werkzeugmaschinentrennvorrichtung mittels einer formschlüssigen und/oder kraftschlüssigen Verbindung zur Bearbeitung eines Werkstücks mit der Werkzeugmaschine wirkungsmäßig zu verbinden. Insbesondere können in einem mit der Werkzeugmaschinentrennvorrichtung gekoppelten Zustand der Kopplungsvorrichtung in einem Betriebszustand der Werkzeugmaschine Kräfte und/oder Drehmomente von der Antriebseinheit der Werkzeugmaschine zum Antrieb des Schneidstrangs an die Werkzeugmaschinentrennvorrichtung übertragen werden. Somit ist die Kopplungsvorrichtung vorzugsweise als Werkzeugaufnahme ausgebildet.

Die Werkzeugmaschinentrennvorrichtung und/oder die Werkzeugmaschine sollen hierbei nicht auf die oben beschriebene Anwendung und Ausführungsform beschränkt sein. Insbesondere kann die Werkzeugmaschinentrennvorrichtung und/oder die Werkzeugmaschine zu einer Erfüllung einer hierin beschriebenen Funktionsweise eine von einer hierin genannten Anzahl von einzelnen Elementen, Bauteilen und Einheiten abweichende Anzahl aufweisen.

### Zeichnung

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine Werkzeugmaschine mit einer Werkzeugmaschinentrennvorrichtung in einer schematischen Darstellung,
- Fig. 2: eine Detailansicht der Werkzeugmaschinentrennvorrichtung in einer schematischen Darstellung,
- Fig. 3: eine Schnittansicht entlang der Linie III-III aus Figur 2 der Werkzeugmaschinentrennvorrichtung in einer schematischen Darstellung,
- Fig. 4: eine Detailansicht von Schneidenträgerelementen eines Schneidstrangs der Werkzeugmaschinentrennvorrichtung in einer schematischen Darstellung,
- Fig. 5: eine weitere Detailansicht eines der Schneidenträgerelemente des Schneidstrangs der Werkzeugmaschinentrennvorrichtung in einer schematischen Darstellung,
- Fig. 6: eine Detailansicht einer Anordnung der Schneidenträgerelemente in einer Führungseinheit der Werkzeugmaschinentrennvorrichtung in einer schematischen Darstellung,
- Fig. 7: eine alternative Werkzeugmaschine mit einer Werkzeugmaschinentrennvorrichtung in einer schematischen Darstellung,
- Fig. 8: eine weitere alterantive Werkzeugmaschine mit einer Werkzeugmaschinentrennvorrichtung in einer schematischen Darstellung,
- Fig. 9: eine Detailansicht eines als tragbare Werkzeugmaschine ausgebildeten Schneidmoduls der Werkzeugmaschine aus Figur 8 in einer schematischen Darstellung und
- Fig. 10: eine Detailansicht einer Anordnung einer Antriebseinheit der Werkzeugmaschine aus Figur 8 und der Werkzeugmaschinentrennvorrichtung in einer schematischen Darstellung.

### Beschreibung der Ausführungsbeispiele

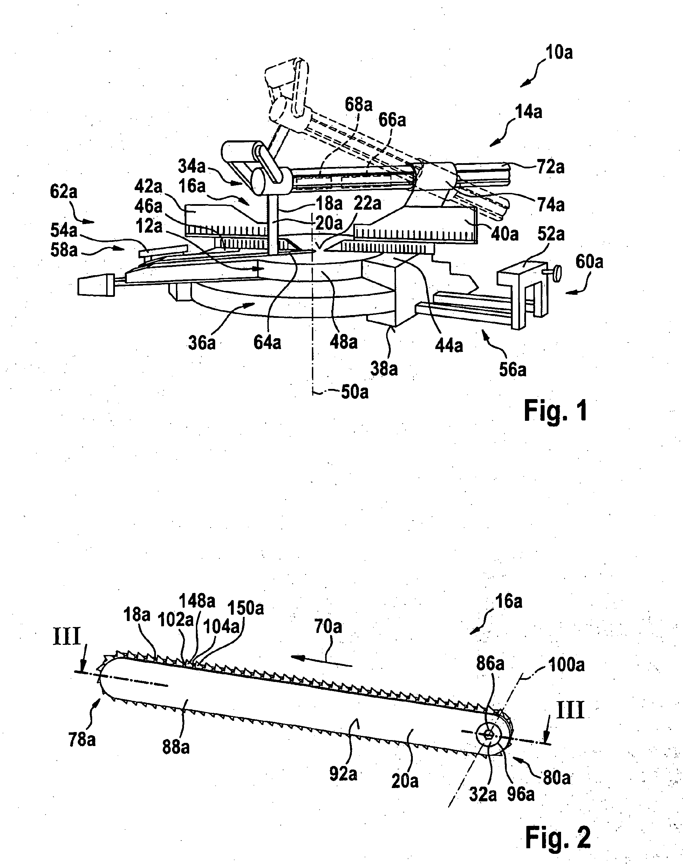

Figur 1 zeigt ein Werkzeugmaschinensystem, das eine von einer Kappsäge gebildete Werkzeugmaschine 10a und eine Werkzeugmaschinentrennvorrichtung 16a umfasst. Es ist jedoch auch denkbar, dass die Werkzeugmaschine 10a als Gehrungssäge oder als eine andere, einem Fachmann als sinnvoll erscheinende Werkzeugmaschine ausgebildet ist. Die Werkzeugmaschine 10a umfasst eine als Werkzeugaufnahme ausgebildete Kopplungsvorrichtung 34a zur formschlüssigen und/oder kraftschlüssigen Kopplung der Werkzeugmaschinentrennvorrichtung 16a mit der Werkzeugmaschine 10a. Die Werkzeugmaschinentrennvorrichtung 16a umfasst einen Schneidstrang 18a und eine Führungseinheit 20a zur Führung des Schneidstrangs 18a. Die Werkzeugmaschine 10a umfasst zudem eine beweglich gelagerte Werzeugführungseinheit 14a, an der die Werkzeugmaschinentrennvorrichtung 16a in einem montierten Zustand mittels der Kopplungsvorrichtung 34a angeordnet ist. Ferner weist die Werkzeugmaschine 10a eine Werkstückauflageeinheit 12a auf, die an einer Grundkörpereinheit 36a der Werkzeugmaschine 10a angeordnet ist. Die Werkzeugführungseinheit 14a ist an der Werkstückauflageeinheit 12a angeordnet. Des Weiteren ist die Werkzeugführungseinheit 14a zumindest in einem Betriebszustand zumindest im Wesentlichen parallel zu einer Auflagefläche 22a der Werkstückauflageeinheit 12a verschiebbar gelagert. Die Werkzeugführungseinheit 14a weist eine Werkzeugführungsstange 72a auf, an der die Kopplungsvorrichtung 34a angeordnet ist, und einen Werkzeugführungslagerbock 74a, der schwenkbar an der Werkstückauflageeinheit 12a gelagert ist. Der Werkzeugführungslagerbock 74a ist schwenkbar um eine zumindest im Wesentlichen parallel zur Auflagefläche 22a der Werkstückauflageeinheit 12a verlaufende Schwenkachse an der Werkstückauflageeinheit 12a gelagert. Die Werkzeugführungsstange 72a ist linear beweglich an dem Werkzeugführungslagerbock 74a gelagert. Die Werkzeugführungseinheit 14a ist dazu vorgesehen, die Werkezugmaschinentrennvorrichtung 16a in einem montierten Zustand bei einer Bewegung zu führen. Der Schneidstrang 18a wird bei einer Bearbeitung eines Werkstücks (hier nicht näher dargestellt) zusammen mit der Führungseinheit 20a mittels der Werkzeugführungseinheit 14a bei einer Bewegung geführt. Die Werkzeugmaschine 10a wird zu einer Bearbeitung von Werkstücken bei einer ordnungsgemäßen Handhabung der Werkzeugmaschine 10a mit einer Grundfläche 38a der Grundkörpereinheit 36a auf einer geeigneten Fläche, wie beispielsweise einer Arbeitsplatte und/oder einem Fertigungshallenboden usw., abgestellt. Es ist jedoch auch denkbar, dass die Grundkörpereinheit 36a ausziehbare Füße aufweist, mittels denen die Werkzeugmaschine 10a zu einer Bearbeitung von Werkstücken auf einer geeigneten Fläche abgestellt werden kann. Die Werkstückauflageeinheit 12a ist zur Auflage eines Werkstücks während einer Bearbeitung vorgesehen. Hierbei weist die Werkstückauflageeinheit 12a zwei als Anschlagschienen ausgebildete Anschlagelemente 40a, 42a auf, an denen ein zu bearbeitendes Werkstück zur Führung anlegbar ist.

Die Werkstückauflageeinheit 12a umfasst ein erstes Werkstückauflageelemente 44a, ein zweites Werkstückauflageelement 46a und ein drittes Werkstückauflageelement 48a. Das erste Werkstückauflageelemente 44a ist einstückig mit der Grundkörpereinheit 36a ausgebildet. Zudem ist das zweite Werkstückauflageelement 46a der Werkstückauflageeinheit 12a ebenfalls einstückig mit der Grundkörpereinheit 36a ausgebildet. Das erste Werkstückauflageelment 44a ist hierbei an einer Seite 60a der Grundkörpereinheit 36a angeordnet, die einer Seite 62a der Grundkörpereinheit 36a, an der das zweite Werkstückauflageelment 46a an der Grundkörpereinheit 36a angeordnet ist, abgewandt ist. Hierbei ist eines der zwei Anschlagelemente 40a, 42a am ersten Werkstückauflageelement 44a und eines der zwei Anschlagelemente 40a, 42a ist am zweiten Werkstückauflageelement 46a angeordnet. Die Anschlagelemente 40a, 42a sind jeweils fest mit dem ersten und dem zweiten Werkstückauflageelement 44a, 46a verbunden. Es ist jedoch auch denkbar, dass die Anschlagelemente 40a, 42a jeweils verstellbar mit dem ersten und dem zweiten Werkstückauflageelement 44a, 46a verbunden sind. Das dritte Werkstückauflageelement 48a, an dem der Werkzeugführungsblock 74a der Werkzeugführungseinheit 14a angeordnet ist, ist schwenkbar relativ zur Grundkörpereinheit 36a in der Grundkörpereinheit 36a gelagert. Somit ist die Werkzeugmaschinentrennvorrichtung 16a zusammen mit dem dritten Werkstückauflageelement 48a relativ zu der Grundkörpereinheit 36a schwenkbar gelagert. Zudem ist die Werkzeugmaschinentrennvorrichtung 16a somit zusammen mit dem dritten Werkstückauflageelement 48a relativ zu dem ersten und dem zweiten Werkstückauflageelement 44a, 46a schwenkbar gelagert. Eine Schwenkachse 50a, um die das dritte Werkstückauflageelement 48a schwenkbar in der Grundkörpereinheit 36a gelagert ist, verläuft zumindest im Wesentlichen senkrecht zur Auflagefläche 22a der Werkstückauflageeinheit 12a.

Das dritte Werkstückauflageelement 48a ist insgesamt um einen Winkel von 90° relativ zur Grundkörpereinheit 36a schwenkbar um die zumindest im Wesentlichen senkrecht zur Auflagefläche 22a verlaufende Schwenkachse 50a gelagert. Die Werkzeugmaschinentrennvorrichtung 16a, die mittels der Werkzeugführungseinheit 14a mit dem dritten Werkstückauflageelement 48a verbunden ist, kann somit ausgehend von einer Mittelstellung, in der eine Schneidebene des Schneidstrangs 18a zumindest im Wesentlichen senkrecht zur einer Anschlagebene der Anschlagelemente 40a, 42a angeordnet ist, in zwei entgegengesetzt gerichtete Richtungen jeweils um einen Winkel von 45° relativ zur Grundkörpereinheit 36a geschwenkt werden. Es ist jedoch auch denkbar, dass die Werkzeugmaschinentrennvorrichtung 16a um einen anderen maximalen Winkel relativ zur Grundkörpereinheit 36a schwenkbar um die zumindest im Wesentlichen senkrecht zur Auflagefläche 22a verlaufende Schwenkachse 50a gelagert ist. Ferner weist das dritte Werkstückauflageelement 48a in der Auflagefläche 22a eine schlitzförmige Ausnehmung 64a auf, in die die Werkzeugmaschinentrennvorrichtung 16a in zumindest einem Betriebszustand hineinragt. Die Ausnehmung 64a ist dazu vorgesehen, zumindest in einem Betriebszustand die Werkzeugmaschinentrennvorrichtung 16a zumindest teilweise aufzunehmen. Mittels der teilweisen Aufnahme der Werkzeugmaschinentrennvorrichtung 16a in der Ausnehmung 64a ist ein zu bearbeitendes Werkstück mittels des Schneidstrangs 18a der Werkzeugmaschinentrennvorrichtung 16a vollständig, entlang einer in der Schneidebene des Schneidstrangs 18a in Richtung der Werkstückauflageeinheit 12a verlaufenden Richtung betrachtet, durchtrennbar.

Des Weiteren weist die Werkstückauflageeinheit 12a ein viertes Werkstückauflageelement 52a und ein fünftes Werkstückauflageelement 54a auf, die beweglich in der Grundkörpereinheit 36a gelagert sind. Es ist jedoch auch denkbar, dass die Werkstückauflageeinheit 12a eine von fünf abweichende Anzahl an Werkstückauflageelementen 44a, 46a, 48a, 52a, 54a aufweist. Das vierte Werkstückauflageelement 52a ist mittels einer Führungsschieneneinheit 56a relativ zur Grundkörpereinheit 36a linear verschiebbar gelagert. Das fünfte Werkstückauflageelement 54a ist mittels einer weiteren Führungsschieneneinheit 58a relativ zur Grundkörpereinheit 36a linear verschiebbar gelagert. Das vierte Werkstückauflageelement 52a ist an der Seite 60a der Grundkörpereinheit 36a gelagert an der das erste Werkstückauflageelement 44a angeordnet ist. In einem eingeschobenen Zustand liegt das vierte Werkstückauflageelement 52a bündig an dem ersten Werkstückauflageelement 44a an. Das fünfte Werkstückauflageelement 54a ist an der Seite 62a der Grundkörpereinheit 36a gelagert an der das zweite Werkstückauflageelement 46a angeordnet ist. In einem eingeschobenen Zustand liegt das fünfte Werkstückauflageelement 54a bündig an dem zweiten Werkstückauflageelement 46a an. Somit ist die Werkstückauflageeinheit 12a an den zwei Seiten 60a, 62a ausziehbar ausgebildet.

Die Werkzeugmaschine 10a weist ferner eine Antriebseinheit 66a und eine Getriebeeinheit 68a auf. Die Antriebseinheit 66a und die Getriebeeinheit 68a sind zur Erzeugung eines auf die Werkzeugmaschinentrennvorrichtung 16a übertragbaren Antriebsmoments auf eine, einem Fachmann bereits bekannte Art und Weise wirkungsmäßig miteinander verbunden. Hierbei sind die Antriebseinheit 66a und/oder die Getriebeeinheit 68a dazu vorgesehen, in einem montierten Zustand der Werkzeugmaschinentrennvorrichtung 16a mittels der Kopplungsvorrichtung 34a mit dem Schneidstrang 18a der Werkzeugmaschinentrennvorrichtung 16a gekoppelt zu werden. Die Getriebeeinheit 68a der Werkzeugmaschine 10a ist als Winkelgetriebe ausgebildet. Die Antriebseinheit 66a ist als Elektromotoreinheit ausgebildet. Es ist jedoch auch denkbar, dass die Antriebseinheit 66a und/oder die Getriebeeinheit 68a eine andere, einem Fachmann als sinnvoll erscheinende Ausgestaltung aufweisen. Ferner ist es ebenfalls denkbar, dass die Antriebseinheit 66a entkoppelt von der Getriebeeinheit 68a direkt mit der Werkzeugmaschinentrennvorrichtung 16a koppelbar ist. Die Antriebseinheit 66a ist dazu vorgesehen, den Schneidstrang 18a der Werkzeugmaschinentrennvorrichtung 16a in zumindest einem Betriebszustand mit einer Schnittgeschwindigkeit kleiner als 6 m/s anzutreiben. Hierbei weist die Werkzeugmaschine 10a zumindest einen Betriebsmodus auf, in dem ein Antrieb des Schneidstrangs 18a in der Führungseinheit 20a der Werkzeugmaschinentrennvorrichtung 16a entlang einer Schneidrichtung 70a des Schneidstrangs 18a mit einer Schnittgeschwindigkeit kleiner als 6 m/s ermöglicht wird. Die Antriebseinheit 66a und die Getriebeeinheit 68a sind in der Werkzeugführungsstange 72a der Werkzeugführungseinheit 14a angeordnet. Es ist jedoch auch denkbar, dass die Antriebseinheit 66a in der Grundkörpereinheit 36a angeordnet ist und lediglich die Getriebeinheit 68a in der Werkzeugführungseinheit 14a angeordnet ist. Es sind jedoch auch andere, einem Fachmann als sinnvoll erscheinende Anordnungen der Antriebseinheit 66a und/oder der Getriebeeinheit 68a denkbar.

Es ist zudem denkbar, dass die Werkzeugmaschine 10a eine Schutzvorrichtung (hier nicht näher dargestellt) umfasst, die mittels einer Sensoreinheit der Schutzvorrichtung eine Position einer Hand eines Bediener relativ zur Werkzeugmaschinentrennvorrichtung 16a sensiert und die bei einer Gefahrensituation für den Bediener den Schneidstrang 18a der Werkzeugmaschinentrennvorrichtung 16a aktiv abbremst und/oder eine Energieversorgung der Antriebseinheit 66a unterbricht. Des Weiteren ist denkbar, dass die Werkzeugmaschine 10a eine Schutzhaubeneinheit (hier nicht näher dargestellt) aufweist, die die Werkzeugmaschinentrennvorrichtung 16a zumindest in einem Betriebszustand teilweise umschließt. Die Schutzhaubeneinheit könnte zwei Seitenwände umfassen, zwischen denen die Werkzeugmaschinentrennvorrichtung 16a in zumindest einem Betriebszustand angeordnet ist. Die Seitenwände der Schutzhaubeneinheit könnten in einem montierten Zustand zumindest im Wesentlichen parallel zur Schneidebene des Schneidstrangs 18a verlaufen. Die Schutzhaubeneinheit könnte zur Bearbeitung eines Werkstücks relativ zur Werkzeugmaschinentrennvorrichtung 16a geschwenkt werden. Es ist jedoch auch denkbar, dass die Schutzhaubeneinheit eine andere, einem Fachmann als sinnvoll erscheinende Ausgestaltung aufweist.

Figur 2 zeigt die Werkzeugmaschinentrennvorrichtung 16a in einem von der Kopplungsvorrichtung 34a der Werkzeugmaschine 10a entkoppelten Zustand. Der Schneidstrang 18a und die Führungseinheit 20a bilden zusammen ein geschlossenes System. Die Führungseinheit 20a ist hierbei als Schwert ausgebildet. Ferner weist die Führungseinheit 20a, in der Schneidebene des Schneidstrangs 18a betrachtet, zumindest zwei konvex ausgebildete Enden 78a, 80a auf.

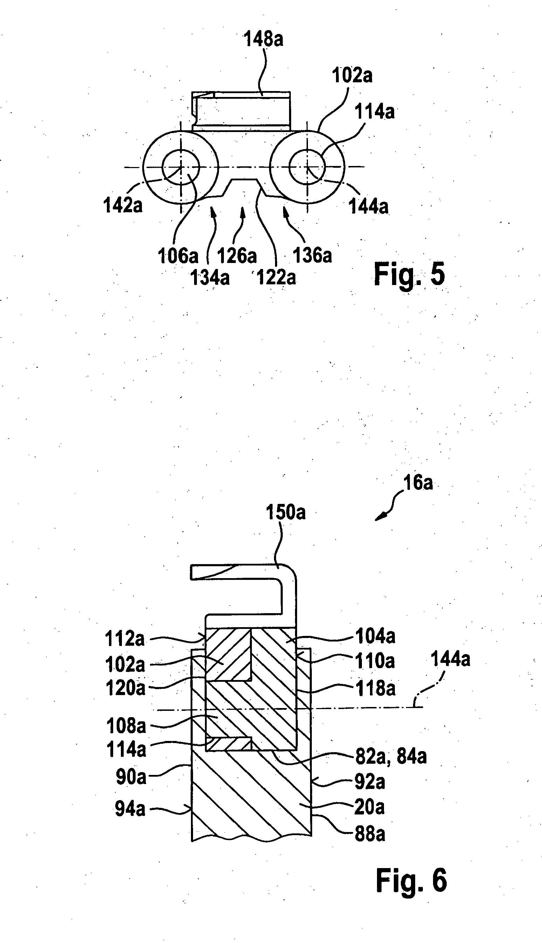

Die konvex ausgebildeten Enden 78a, 80a der Führungseinheit 20a sind an zwei sich abgewandten Seiten der Führungseinheit 20a angeordnet. Der Schneidstrang 18a wird mittels der Führungseinheit 20a geführt. Hierzu weist die Führungseinheit 20a zumindest ein Führungselement 82a (Figur 6) auf, mittels dessen der Schneidstrang 18a geführt wird. Das Führungselement 82a ist hierbei als Führungsnut 84a ausgebildet, die sich in einer Schneidebene des Schneidstrangs 18a entlang eines gesamten Umfangs der Führungseinheit 20a erstreckt. Hierbei wird der Schneidstrang 18a mittels die Führungsnut 84a begrenzende Randbereiche der Führungseinheit 20a geführt. Es ist jedoch auch denkbar, dass das Führungselement 82a in einer anderen, einem Fachmann als sinnvoll erscheinenden Art und Weise, wie beispielsweise als rippenartige Anformung an der Führungseinheit 20a, die in eine Ausnehmung an dem Schneidstrang 18a eingreift, ausgebildet ist. Der Schneidstrang 18a wird, in einer senkrecht zur Schneidebene verlaufenden Ebene betrachtet, von drei Seiten von den die Führungsnut 84a begrenzenden Randbereichen umgeben (Figur 6). Der Schneidstrang 18a wird während eines Betriebs umlaufend entlang des Umfangs in der Führungsnut 84a relativ zur Führungseinheit 20a bewegt.

Des Weiteren weist die Werkzeugmaschinentrennvorrichtung 16a ein mittels der Führungseinheit 20a zumindest teilweise gelagertes Drehmomentübertragungselement 32a zum Antrieb des Schneidstrangs 18a auf. Hierbei weist das Drehmomentübertragungselement 32a eine Kopplungsausnehmung 86a auf, die in einem montierten Zustand mit einer Abtriebswelle (hier nicht näher dargestellt) der Getriebeeinheit 68a und/oder einem auf der Abtriebswelle angeordneten Zahnrad (hier nicht näher dargestellt) der Getriebeeinheit 68a koppelbar ist. Es ist jedoch auch denkbar, dass das Drehmomentübertragungselement 32a in einem gekoppelten Zustand zum Antrieb des Schneidstrangs 18a direkt mit einem auf einer Antriebswelle (hier nicht näher dargestellt) der Antriebseinheit 66a angeordneten Ritzel (hier nicht näher dargestellt) der Antriebseinheit 66a gekoppelt ist. Die Kopplungsausnehmung 86a ist konzentrisch im Drehmomentübertragungselement 32a angeordnet. Die Kopplungsausnehmung 86a ist als Innensechskant ausgebildet. Es ist jedoch auch denkbar, dass die Kopplungsausnehmung 86a eine andere, einem Fachmann als sinnvoll erscheinende Ausgestaltung aufweist.

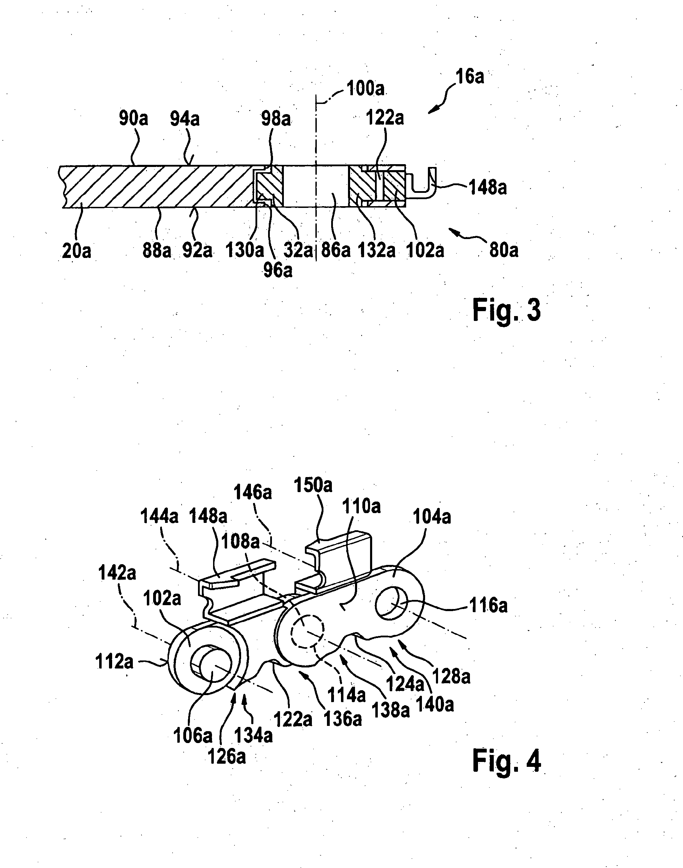

In einem ungekoppelten Zustand ist das Drehmomentübertragungselement 32a quer zur Schneidrichtung 70a des Schneidstrangs 18a und/oder entlang der Schneidrichtung 70a in der Führungseinheit 20a beweglich angeordnet (Figur 3). Hierbei ist das Drehmomentübertragungselement 32a zumindest teilweise zwischen zwei Außenwänden 88a, 90a der Führungseinheit 20a angeordnet. Die Außenwände 88a, 90a verlaufen zumindest im Wesentlichen parallel zur Schneidebene des Schneidstrangs 18a. Die Führungseinheit 20a weist in Außenflächen 92a, 94a der Außenwände 88a, 90a jeweils eine Ausnehmung 96a, 98a auf, in der das Drehmomentübertragungselement 32a zumindest teilweise angeordnet ist.

Das Drehmomentübertragungselement 32a ist mit einem Teilbereich in den Ausnehmungen 96a, 98a der Außenwände 90a, 92a angeordnet. Das Drehmomentübertragungselement 32a weist hierbei zumindest in dem in den Ausnehmungen 96a, 98a angeordneten Teilbereich eine Erstreckung entlang einer Rotationsachse 100a des Drehmomentübertragungselements 32a auf, die bündig mit einer der Außenflächen 92a, 94a der Führungseinheit 20a abschließt. Ferner weist der in den Ausnehmungen 96a, 98a der Außenflächen 92a, 94a der Führungseinheit 20a angeordnete Teilbereich des Drehmomentübertragungselements 32a eine sich zumindest im Wesentlichen senkrecht zur Rotationsachse 100a des Drehmomentübertragungselements 32a erstreckende Außenabmessung auf, die zumindest 0,1 mm kleiner ist als eine sich zumindest im Wesentlichen senkrecht zur Rotationsachse 100a des Drehmomentübertragungselements 32a erstreckende Innenabmessung der Ausnehmungen 96a, 98a. Der in den Ausnehmungen 96a, 98a angeordnete Teilbereich des Drehmomentübertragungselements 32a ist entlang einer senkrecht zur Rotationsachse 100a verlaufenden Richtung jeweils beabstandet zu einem die jeweilige Ausnehmung 96a, 98a begrenzenden Rand der Außenwände 90a, 92a. Somit weist der in den Ausnehmungen 96a, 98a angeordnete Teilbereich des Drehmomentübertragungselements 32a ein Spiel innerhalb der Ausnehmungen 96a, 98a auf.

Figur 4 zeigt eine Detailansicht von Schneidenträgerelementen 102a, 104a des Schneidstrangs 18a der Werkzeugmaschinentrennvorrichtung 16a. Der Schneidstrang 18a umfasst eine Vielzahl miteinander verbundener Schneidenträgerelemente 102a, 104a, die jeweils mittels eines Verbindungselements 106a, 108a des Schneidstrangs 18a miteinander verbunden sind, das zumindest im Wesentlichen bündig mit einer von zwei Außenflächen 110a, 112a eines der miteinander verbundenen Schneidenträgerelemente 102a, 104a abschließt (vgl. auch Figur 6). Die Verbindungselemente 106a, 108a sind bolzenförmig ausgebildet. Die Außenflächen 110a, 112a verlaufen in einem in der Führungsnut 84a angeordneten Zustand des Schneidstrangs 18a zumindest im Wesentlichen parallel zur Schneidebene des Schneidstrangs 18a. Ein Fachmann wird je nach Anwendungsfall eine für den Schneidstrang 18a geeignete Anzahl an Schneidenträgerelementen 102a, 104a auswählen. Die Schneidenträgerelemente 102a, 104a sind jeweils einstückig mit einem der Verbindungselemente 106a, 108a ausgebildet. Ferner weisen die Schneidenträgerelemente 102a, 104a jeweils eine Verbindungsausnehmung 114a, 116a zur Aufnahme eines der Verbindungselemente 106a, 108a der miteinander verbundenen Schneidenträgerelemente 102a, 104a auf. Die Verbindungselemente 106a, 108a sind mittels der Führungseinheit 20a geführt (Figur 6). Hierbei sind die Verbindungselemente 106a, 108a in einem montierten Zustand des Schneidstrangs 18a in der Führungsnut 84a angeordnet. Die Verbindungselemente 106a, 108a können sich, in einer senkrecht zur Schneidebene verlaufenden Ebene betrachtet, an zwei Seitenwänden 118a, 120a der Führungsnut 84a abstützen. Die Seitenwände 118a, 120a begrenzen die Führungsnut 84a entlang einer senkrecht zur Schneidebene verlaufenden Richtung. Ferner erstrecken sich die Seitenwände 118a, 120a der Führungsnut 84a, in der Schneidebene betrachtet, ausgehend von der Führungseinheit 20a senkrecht zur Schneidrichtung 70a des Schneidstrangs 18a nach außen.

Die Schneidenträgerelemente 102a, 104a des Schneidstrangs 18a weisen jeweils eine Ausnehmung 122a, 124a auf, die jeweils in einem montierten Zustand auf einer dem Drehmomentübertragungselement 32a zugewandten Seite 126a, 128a des jeweiligen Schneidenträgerelements 102a, 104a angeordnet ist. Das Drehmomentübertragungselement 32a greift in zumindest einem Betriebszustand zum Antrieb des Schneidstrangs 18a in die Ausnehmungen 122a, 124a ein. Das Drehmomentübertragungselement 32a ist hierbei als Zahnrad ausgebildet. Somit umfasst das Drehmomentübertragungselement 32a Zähne 130a, 132a, die dazu vorgesehen sind, in zumindest einem Betriebszustand zum Antrieb des Schneidstrangs 18a in die Ausnehmungen 122a, 124a der Schneidenträgerelemente 102a, 104a einzugreifen. Ferner sind die dem Drehmomentübertragungselement 32a zugewandten Seiten 126a, 128a der Schneidenträgerelemente 102a, 104a kreisbogenförmig ausgebildet. Die dem Drehmomentübertragungselement 32a in einem montierten Zustand zugewandten Seiten 126a, 128a der Schneidenträgerelemente 102a, 104a sind jeweils in Teilbereichen 134a, 136a, 138a, 140a, zwischen einer Mittelachse 142a des jeweiligen Verbindungselements 106a, 108a und einer Mittelachse 144a, 146a der jeweiligen Verbindungsausnehmung 114a, 116a betrachtet, kreisbogenförmig ausgestaltet. Die kreisbogenförmigen Teilbereiche 134a, 136a, 138a, 140a sind jeweils angrenzend an die Ausnehmungen 122a, 124a, in die das Drehmomentübertragungselement 32a eingreift, ausgebildet. Hierbei weisen die kreisbogenförmigen Teilbereiche 134a, 136a, 138a, 140a einen Radius auf, der einem Radius eines Verlaufs der Führungsnut 84a an den konvexen Enden 78a, 80a entspricht. Die Teilbereiche 134a, 136a, 138a, 140a sind konkav ausgebildet (Figur 5).

Ferner weist der Schneidstrang 18a Schneidelemente 148, 150a auf. Die Schneidelemente 148, 150a sind jeweils einstückig mit einem der Schneidenträgerelemente 102a, 104a ausgebildet. Es ist jedoch auch denkbar, dass die Schneidelemente 148, 150a getrennt von den Schneidenträgerelementen 102a, 104a ausgebildet sind. Eine Anzahl der Schneidelemente 148, 150a ist abhängig von einer Anzahl an Schneidenträgerelementen 102a, 104a. Ein Fachmann wird je nach Anzahl an Schneidenträgerelementen 102a, 104a eine geeignete Anzahl an Schneidelementen 148, 150a auswählen. Die Schneidelemente 148, 150a sind dazu vorgesehen, ein Abtrennen und/oder ein Abtragen von Werkstoffteilchen eines zu bearbeitenden Werkstücks zu ermöglichen. Die Schneidelemente 148, 150a können beispielsweise als Vollmeißel, Halbmeißel oder andere, einem Fachmann als sinnvoll erscheinende Schneidenarten ausgebildet sein, die dazu vorgesehen sind, ein Abtrennen und/oder ein Abtragen von Werkstoffteilchen eines zu bearbeitenden Werkstücks zu ermöglichen. Der Schneidstrang 18a ist endlos ausgebildet. Somit ist der Schneidstrang 18a als Schneidkette ausgebildet. Die Schneidenträgerelemente 102a, 104a sind hierbei als Kettenglieder ausgebildet, die mittels der bolzenförmigen Verbindungselemente 106a, 108a miteinander verbunden sind. Es ist jedoch auch denkbar, dass der Schneidstrang 18a, die Schneidenträgerelemente 102a, 104a und/oder die Verbindungselemente 106a, 108a in einer anderen, einem Fachmann als sinnvoll erscheinenden Art und Weise ausgestaltet sind.

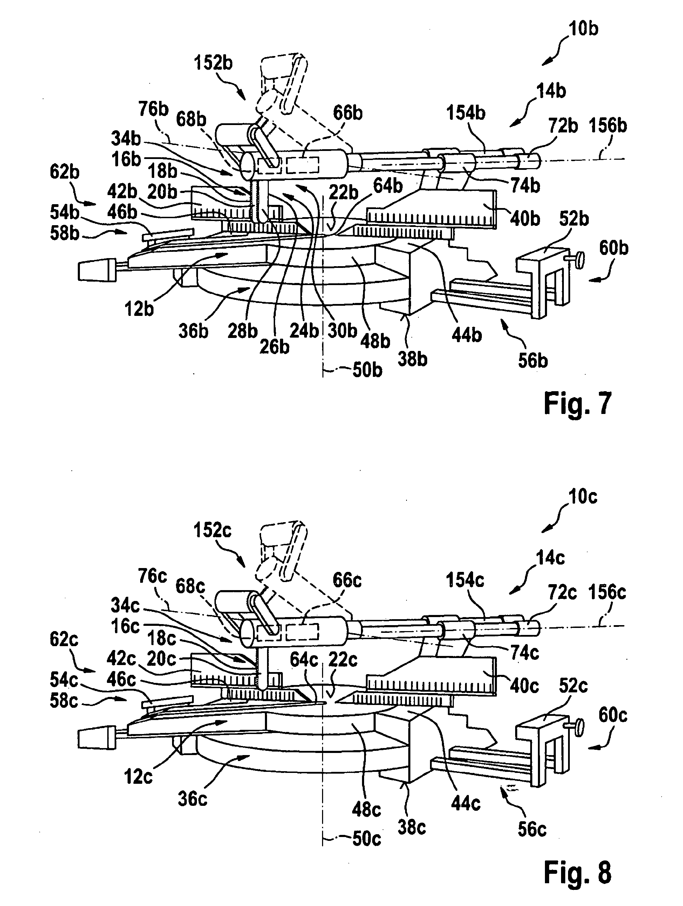

In Figuren 7 bis 11 sind zwei alternative Ausführungsbeispiele dargestellt. Im Wesentlichen gleichbleibende Bauteile, Merkmale und Funktionen sind grundsätzlich mit den gleichen Bezugszeichen beziffert. Zur Unterscheidung der Ausführungsbeispiele sind den Bezugszeichen der Ausführungsbeispiele die Buchstaben a bis c hinzugefügt. Die nachfolgende Beschreibung beschränkt sich im Wesentlichen auf die Unterschiede zu dem ersten Ausführungsbeispiel in den Figuren 1 bis 6, wobei bezüglich gleichbleibender Bauteile, Merkmale und Funktionen auf die Beschreibung des ersten Ausführungsbeispiels in den Figuren 1 bis 6 verwiesen werden kann.

Figur 7 zeigt ein alternatives Werkzeugmaschinensystem, das eine von einer Kappsäge gebildete Werkzeugmaschine 10b und eine Werkzeugmaschinentrennvorrichtung 16b umfasst. Die Werkzeugmaschinentrennvorrichtung 16b weist einen Schneidstrang 18b und eine Führungseinheit 20b zur Führung des Schneidstrangs 18b auf. Ferner weist die Werkzeugmaschinentrennvorrichtung 16b einen zu der in den Figuren 1 bis 6 beschriebenen Werkzeugmaschinentrennvorrichtung 16a analogen Aufbau auf. Die Werkzeugmaschine 10b umfasst eine Werkstückauflageeinheit 12b zur Auflage eines Werkstücks (hier nicht näher dargestellt) während einer Bearbeitung und eine beweglich gelagerte Werkzeugführungseinheit 14b. Die Werkstückauflageeinheit 12b ist an einer Grundkörpereinheit 36b der Werkzeugmaschine 10b angeordnet. Die Werkzeugmaschinentrennvorrichtung 16b ist in einem montierten Zustand mittels einer Kopplungsvorrichtung 34b an der Werkzeugführungseinheit 14b angeordnet.

Die Werkzeugführungseinheit 14b ist an der Werkstückauflageeinheit 12b angeordnet. Hierbei umfasst die Werkzeugführungseinheit 14b zwei Werkzeugführungsstangen 72b, 154b, an der ein die Kopplungsvorrichtung 34b umfassendes Schneidmoduls 152b der Werkzeugmaschine 10b angeordnet ist, und ein Werkzeugführungslagerbock 74b, der mit der Werkstückauflageeinheit 12b verbunden ist. Die Werkzmaschinentrennvorrichtung 16b ist zusammen mit der Werkzeugführungseinheit 14b um eine zumindest im Wesentlichen senkrecht zu einer Auflagefläche 22b der Werkstückauflageeinheit 12b schwenkbar realtiv zur Grundkörpereinheit 36b gelagert. Die Werkzeugführungsstangen 72b, 154b sind zumindest im Wesentlichen parallel zur Auflagefläche 22b linear verschiebbar an dem Werkzeugführungslagerbock 74b gelagert. Das Schneidmodul 152b umfasst eine Antriebseinheit 66b und eine Getriebeeinheit 68b der Werkzeugmaschine 10b zum Antrieb des Schneidstrangs 18b. Ferner ist das Schneidmodul 152b relativ zur Werkzeugführungseinheit 14b schwenkbar gelagert. Eine Schwenkachse 76b, um die das Schneidmodul 152b relativ zur Werkzeugführungseinheit 14b schwenkbar gelagert ist, verläuft zumindest im Wesentlichen parallel zur Auflagefläche 22b und zumindest im Wesentlichen senkrecht zu einer Längsachse 156b einer der Werkzeugführungsstangen 72b, 154b. Es ist jedoch auch denkbar, dass das Schneidmodul 152b zusätzlich um eine zumindest im Wesentlcihen parallel zur Längsachse 156b einer der Werkzeugführungsstangen 72b, 154b verläuft. Somit ist die Werkzeugmaschinentrennvorrichtung 16b in einem montierten Zustand mittels der Kopplungsvorrichtung 34b des Schneidmoduls 152b relativ schwenkbar zur Werkzeugführungseinheit 14b gelagert.

Des Weiteren weist das Werkzeugmaschinensystem eine weitere Werkzeugmaschinentrennvorrichtung 24b auf, die einen weiteren Schneidstrang 26b und eine weitere Führungseinheit 28b zur Führung des weiteren Schneidstrangs 26b aufweist. Die weitere Werkzeugmaschinentrennvorrichtung 24b weist einen zur Werkzeugmaschinentrennvorrichtung 16b analogen Aufbau auf. Die Werkzeugmaschine 10b umfasst hierbei eine weitere Kopplungsvorrichtung 30b zur formschlüssigen und/oder kraftschlüssigen Kopplung der weiteren Werkzeugmaschinentrennvorrichtung 24b mit der Werkzeugmaschine 10b. Die Werkzeugmaschinentrennvorichtung 14b und die weitere Werkezugmaschinentrennvorrichtung 24b sind in einem montierten Zustand in zueinander zumindest im Wesentlichen parallel versetzten Schneidebenen der jeweiligen Schneidstränge 18b, 26b angeordnet. Ferner sind die Werkzeugmaschinentrennvorichtung 14b und die weitere Werkezugmaschinentrennvorrichtung 24b in zumindest einem Betriebszustand gegenläufig mittels der Antriebseinheit 66b der Werkzeugmaschine 10b antreibbar.

Figur 8 zeigt ein weiteres alternatives Werkzeugmaschinensystem, das eine von einer Kappsäge gebildete Werkzeugmaschine 10c und eine Werkzeugmaschinentrennvorrichtung 16c umfasst. Die Werkzeugmaschinentrennvorrichtung 16c weist einen Schneidstrang 18c und eine Führungseinheit 20c zur Führung des Schneidstrangs 18c auf. Ferner weist die Werkzeugmaschinentrennvorrichtung 16c einen zu der in den Figuren 1 bis 6 beschriebenen Werkzeugmaschinentrennvorrichtung 16a analogen Aufbau auf. Die Werkzeugmaschine 10c umfasst eine Werkstückauflageeinheit 12c zur Auflage eines Werkstücks (hier nicht näher dargestellt) während einer Bearbeitung und eine beweglich gelagerte Werkzeugführungseinheit 14c. Die Werkstückauflageeinheit 12c ist an einer Grundkörpereinheit 36c der Werkzeugmaschine 10c angeordnet. Die Werkzeugmaschinentrennvorrichtung 16c ist in einem montierten Zustand mittels einer Kopplungsvorrichtung 34c an der Werkzeugführungseinheit 14c angeordnet.

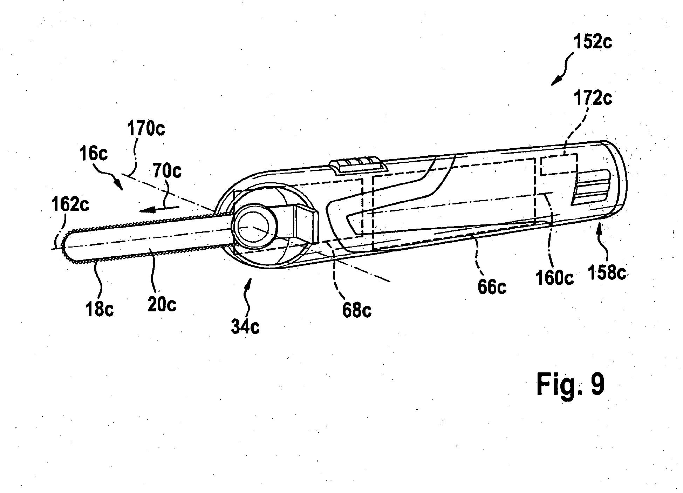

Die Werkzeugführungseinheit 14c ist an der Werkstückauflageeinheit 12c angeordnet. Hierbei umfasst die Werkzeugführungseinheit 14b zwei Werkzeugführungsstangen 72c, 154c, an der ein die Kopplungsvorrichtung 34c umfassendes Schneidmodul 152c der Werkzeugmaschine 10c angeordnet ist, und ein Werkzeugführungslagerbock 74c, der mit der Werkstückauflageeinheit 12c verbunden ist. Die Werkzmaschinentrennvorrichtung 16c ist zusammen mit der Werkzeugführungseinheit 14c um eine zumindest im Wesentlichen senkrecht zu einer Auflagefläche 22c der Werkstückauflageeinheit 12c schwenkbar realtiv zur Grundkörpereinheit 36c gelagert. Die Werkzeugführungsstarigen 72c, 154c sind zumindest im Wesentlichen parallel zur Auflagefläche 22c linear verschiebbar an dem Werkzeugführungslagerbock 74c gelagert. Das Schneidmodul 152c umfasst eine Antriebseinheit 66c und eine Getriebeeinheit 68c der Werkzeugmaschine 10c zum Antrieb des Schneidstrangs 18c. Ferner ist das Schneidmodul 152c relativ zur Werkzeugführungseinheit 14c schwenkbar gelagert. Eine Schwenkachse 76c, um die das Schneidmodul 152c relativ zur Werkzeugführungseinheit 14c schwenkbar gelagert ist, verläuft zumindest im Wesentlichen parallel zur Auflagefläche 22c und zumindest im Wesentlichen senkrecht zu einer Längsachse 156c einer der Werkzeugführungsstangen 72c, 154c. Es ist jedoch auch denkbar, dass das Schneidmodul 152c zusätzlich um eine zumindest im Wesentlcihen parallel zur Längsachse 156c einer der Werkzeugführungsstangen 72c, 154c verläuft. Somit ist die Werkzeugmaschinentrennvorrichtung 16c in einem montierten Zustand mittels der Kopplungsvorrichtung 34c des Schneidmoduls 152c relativ schwenkbar zur Werkzeugführungseinheit 14c gelagert. Des Weiteren ist das Schneidmodul 152c abnehmbar an den Werkzeugführungsstangen 72c, 154c angeordnet. Das Schneidmodul 152c ist somit dazu vorgesehen, von den Werkzeugführungsstangen 72c, 154c abgenommen zu werden und als tragbare Werkzeugmaschine betrieben zu werden. Das Schneidmodul 152c weist hierbei eine Eenrgieversorgungskopplungseinheit 158c auf (Figur 9), die mit einem Netzstecker (hier nicht näher dargestellt) zu einem Netzbetrieb und/oder mit einem Akkumulator (hier nicht näher dargestellt) koppelbar ist.

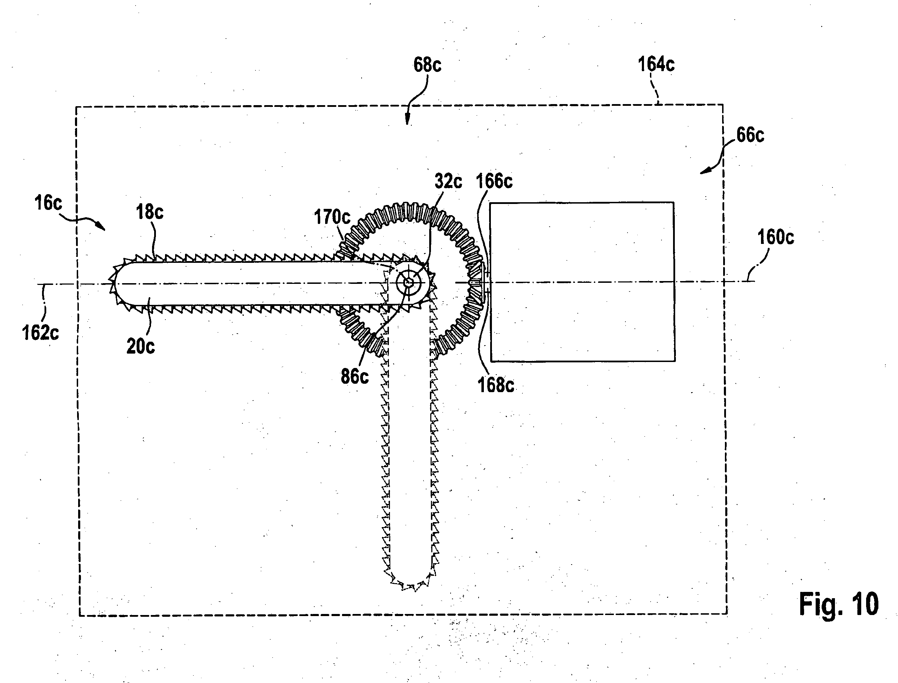

Figur 10 zeigt eine Detailansicht einer Anordnung der in dem Schneidmodul 152c angeordneten Antriebseinheit 66c und der in dem Schneidmodul 152c angeordneten Getriebeeinheit 68c der Werkzeugmaschine 10c in einem gekoppelten Zustand der Kopplungsvorrichtung 34c mit der Werkzeugmaschinentrennvorrichtung 16c. In einem gekoppelten Zustand der Kopplungsvorrichtung 34c mit der Werkzeugmaschinentrennvorrichtung 16c sind eine Antriebseinheitslängsachse 160c der Antriebseinheit 66c und eine Längsachse 162c der Führungseinheit 20c zumindest im Wesentlichen in einer gemeinsamen Ebene 164c angeordnet. Die Antriebseinheitslängsachse 160c verläuft hierbei koaxial zu einer Antriebswelle 166c der Antriebseinheit 66c. Die Antriebswelle 166c ist als Ankerwelle 168c ausgebildet. Die Längsachse 162c der Führungseinheit 20c verläuft, in einer Schneidebene des Schneidstrangs 18c betrachtet, zumindest im Wesentlichen parallel zu zwei zumindest im Wesentlichen parallel verlaufenden Geraden einer Außenkontur der Führungseinheit 20c.

Die Kopplungsvorrichtung 34c ist zumindest in einem mit der Werkzeugmaschinentrennvorrichtung 16c gekoppelten Zustand relativ zur Antriebseinheit 66c beweglich gelagert. Hierbei weist die Kopplungsvorrichtung 34c eine Bewegungsmöglichkeit entlang zumindest einer Strecke und/oder um eine Achse auf, die unabhängig von einer reinen Schließbewegung der Kopplungsvorrichtung 34c zur wirkungsmäßigen Verbindung der Werkzeugmaschinentrennvorrichtung 16c mit dem Schneidmodul 152c ist und/oder unabhängig von einer reinen Öffnungsbewegung der Kopplungsvorrichtung 34c zu einem Lösen der wirkungsmäßigen Verbindung der Werkzeugmaschinentrennvorrichtung 16c mit dem Schneidmodul 152c ist. Die Kopplungsvorrichtung 34c kann zur Bearbeitung eines Werkstücks mit der Werkzeugmaschinentrerinvorrichtung 16c, die mittels der Kopplungsvorrichtung 34c wirkungsmäßig mit dem Schneidmodul 152c gekoppelt ist, bewegt werden. Die Kopplungsvorrichtung 34c kann manuell infolge einer Krafteinwirkung eines Bedieners auf die Kopplungsvorrichtung 34c in eine vom Bediener gewünschte Position bewegt werden. Es ist jedoch auch denkbar, dass das Schneidmodul 152c eine Kopplungsvorrichtungsantriebseinheit (hier nicht näher dargestellt) umfasst, die dazu vorgesehen ist, die Kopplungsvorrichtung 34c zu einer Ausführung einer von der Öffnungsbewegung und/oder von der Schließbewegung unabhängigen Bewegung anzutreiben. Die Kopplungsvorrichtungsantriebseinheit kann beispielsweise als Elektromotoreinheit ausgebildet sein oder als eine andere, einem Fachmann als sinnvoll erscheinende Kopplungsvorrichtungsantriebseinheit.

Die Kopplungsvorrichtung 34c ist zumindest in einem mit der Werkzeugmaschinentrennvorrichtung 16c gekoppelten Zustand relativ zur Antriebseinheit 66c schwenkbar gelagert. Die Kopplungsvorrichtung 34c ist um eine zumindest im Wesentlichen senkrecht zur Antriebseinheitslängsachse 160c der Antriebseinheit 66c verlaufende Schwenkachse 170c schwenkbar gelagert. Die Kopplungsvorrichtung 34c ist ferner in einem von der Werkzeugmaschinentrennvorrichtung 16c entkoppelten Zustand relativ zur Antriebseinheit 66c um die zumindest im Wesentlichen senkrecht zur Antriebseinheitslängsachse 160c verlaufende Schwenkachse 170c schwenkbar. Es ist jedoch auch denkbar, dass die Kopplungsvorrichtung 34c zusätzlich um eine zumindest im Wesentlichen parallel zur Antriebseinheitslängsachse 160c der Antriebseinheit 66c verlaufende Schwenkachse schwenkbar gelagert ist. Die Antriebseinheitslängsachse 160c verläuft hierbei koaxial zu einer Rotationsachse der Ankerwelle 168c. Die Kopplungsvorrichtung 34c kann zur Bearbeitung eines Werkstücks mit der Werkzeugmaschinentrennvorrichtung 16c, die mittels der Kopplungsvorrichtung 34c wirkungsmäßig mit dem Schneidmodul 152c gekoppelt ist, um die Schwenkachse 170c geschwenkt werden. Hierbei kann die Kopplungsvorrichtung 34c in einem Winkelbereich von 180° geschwenkt werden. Es ist jedoch auch denkbar, dass die Kopplungsvorrichtung 34c in einem von dem Winkelbereich von 180° abweichenden Winkelbereich geschwenkt werden kann, wie beispielsweise in einem Winkelbereich von 270° usw. Der Winkelbereich von 180° wird hierbei von Teilwinkelbereichen gebildet, die sich jeweils ausgehend von der Antriebseinheitslängsachse 160c in entgegengesetzt gerichtete Richtung um 90° erstrecken. Die Kopplungsvorrichtung 34c ist in dem Winkelbereich von 180° in jeder beliebigen Position fixierbar. Die Fixierung der Kopplungsvorrichtung 34c kann mittels einer Rastvorrichtung (hier nicht näher dargestellt) oder einer anderen, einem Fachmann als sinnvoll erscheinenden Vorrichtung, wie beispielsweise einer Klemmvorrichtung usw., erreicht werden.

Des Weiteren umfasst das Schneid modul 152c eine Antriebsrichturigsumkehreinheit 172c, die dazu vorgesehen ist, eine Antriebsrichtung der Antriebseinheit 66c abhängig von einer in dem Winkelbereich von 180° relativen Winkelstellung der Kopplungsvorrichtung 34c zu ändern. Die Antriebsrichtungsumkehreinheit 172c ist als Elektronikmodul ausgebildet, das dazu vorgesehen ist, zur Änderung der Antriebsrichtung in eine Motorsteuerung zur Steuerung der Antriebseinheit 66c einzugreifen. Eine Stromversorgung der als Elektromotoreinheit ausgebildeten Antriebseinheit 66c wird bei einem Erreichen und/oder Überschreiten der Kopplungsvorrichtung 34c eines vorgegebenen Winkels innerhalb des Winkelbereichs von 180° mittels der Antriebsrichtungsumkehreinheit 172c zur Änderung der Antriebsrichtung umgepolt. Die als Elektromotoreinheit ausgebildete Antriebseinheit 66c ändert infolge der Umpolung der Stromversorgung die Antriebsrichtung. Es ist jedoch auch denkbar, dass eine Änderung der Antriebsrichtung mittels der Antriebsrichtungsumkehreinheit 172c auf eine andere, einem Fachmann als sinnvoll erscheinende Weise erreicht werden kann, wie beispielweise mittels eines Vertauschens von zwei Phasen einer Stromversorgung usw. Die Schneidrichtung 70c des Schneidstrangs 18c ändert infolge der Änderung der Antriebsrichtung der Antriebseinheit 66c die Ausrichtung. Bei der Änderung der Antriebsrichtung verläuft die Schneidrichtung 70c in eine zu einer ursprünglichen Ausrichtung der Schneidrichtung 70c entgegengesetzt gerichtete Richtung.

Bei einer Bearbeitung eines Werkstücks mittels der durch die Kopplungsvorrichtung 34c wirkungsmäßig mit dem Schneidmodul 152c verbundenen Werkzeugmaschinentrennvorrichtung 16c in einer Position der Kopplungsvorrichtung 34c in dem Winkelbereich von 180°, in dem die Längsachse 162c der Führungseinheit 20c zumindest im Wesentlichen koaxial zur Antriebseinheitslängsachse 160c ausgerichtet ist, kann der Bediener die Kopplungsvorrichtung 34c ausgehend von der Antriebseinheitslängsachse 160c jeweils um 90° in zueinander entgegengesetzte Richtungen schwenken. Hierbei wird ein Winkel, um den die Kopplungsvorrichtung 34c geschwenkt wird, zwischen der Antriebseinheitslängsachse 160c und der Längsachse 162c der Führungseinheit 20c betrachtet. Somit kann der Bediener die Kopplungsvorrichtung 34c in eine für eine Bearbeitung eines Werkstücks mittels der Werkzeugmaschinentrennvorrichtung 16c geeignete Position relativ zur Antriebseinheit 66c schwenken.

## Patentansprüche

1. Werkzeugmaschinensystem mit zumindest einer Werkzeugmaschine, insbesondere einer Kappsäge, die zumindest eine Werkstückauflageeinheit (12a; 12b; 12c) zur Auflage eines Werkstücks während einer Bearbeitung und zumindest eine beweglich gelagerte Werkzeugführungseinheit (14a; 14b; 14c) aufweist, und mit zumindest einer an der Werkzeugführungseinheit (14a; 14b; 14c) angeordneten Werkzeugmaschinentrennvorrichtung, wobei die Werkzeugmaschinentrennvorrichtung zumindest einen Schneidstrang (18a; 18b; 18c) und zumindest eine Führungseinheit (20a; 20b; 20c) zur Führung des Schneidstrangs (18a; 18b; 18c) aufweist,
wobei die Werkzeugführungseinheit (14a; 14b; 14c) linear beweglich entlang zumindest einer Achse (156b, 156c) und/oder zusätzlich schwenkbar um zumindest eine weitere Achse gelagert ist, **dadurch gekennzeichnet, dass** die Werkzeugführungseinheit (14a; 14b; 14c) um eine zumindest im Wesentlichen senkrecht zu einer Auflagefläche (22a; 22b; 22c) der Werkstückauflageeinheit (12a; 12b; 12c) verlaufende Schwenkachse (50a; 50b; 50c) schwenkbar gelagert ist.

2. Werkzeugmaschinensystem nach Anspruch 1,
**dadurch gekennzeichnet, dass** die Werkzeugmaschinentrennvorrichtung in zumindest einem Betriebszustand zumindest im Wesentlichen parallel zur Auflagefläche (22a; 22b; 22c) der Werkstückauflageeinheit (12a; 12b; 12c) verschiebbar gelagert ist.

3. Werkzeugmaschinensystem nach einem der vorhergehenden Ansprüche,
**dadurch gekennzeichnet, dass** die Werkzeugmaschinentrennvorrichtung in zumindest einem Betriebszustand relativ zur Werkstückauflageeinheit (12a; 12b; 12c) schwenkbar gelagert ist.

4. Werkzeugmaschinensystem nach einem der vorhergehenden Ansprüche,
**dadurch gekennzeichnet, dass** die Werkzeugmaschinentrennvorrichtung relativ zur Werkzeugführungseinheit (14b; 14c) schwenkbar gelagert ist.

5. Werkzeugmaschinensystem nach einem der vorhergehenden Ansprüche,
**gekennzeichnet durch** eine weitere Werkzeugmaschinentrennvorrichtung, die zumindest einen Schneidstrang (26b) und zumindest eine Führungseinheit (28b) zur Führung des Schneidstrangs aufweist.

6. Werkzeugmaschinensystem nach Anspruch 5,
**dadurch gekennzeichnet, dass** die Werkzeugmaschinentrennvorichtungen gegenläufig mittels einer Antriebseinheit (66b) der Werkzeugmaschine antreibbar sind.

7. Werkzeugmaschinensystem nach einem der vorhergehenden Ansprüche,
**dadurch gekennzeichnet, dass** die Werkstückauflageeinheit (12a; 12b; 12c) zumindest an einer Seite (60a, 62a; 60b, 62b; 60c, 62c) ausziehbar ausgebildet ist.

## Claims

1. Machine-tool system having at least one machine tool, in particular a crosscut saw, which has at least one workpiece-bearing unit (12a; 12b; 12c), for bearing a workpiece during machining, and at least one movably mounted tool-guide unit (14a; 14b; 14c), and having at least one machine-tool severing device, which is arranged on the tool-guide unit (14a; 14b; 14c), wherein the machine-tool severing device has at least one cutting strand (18a; 18b; 18c) and at least one guide unit (20a; 20b; 20c), for guiding the cutting strand (18a; 18b; 18c), wherein the tool-guide unit (14a; 14b; 14c) is mounted such that it can be moved linearly along at least one axis (156b, 156c) and/or such that it can additionally be pivoted about at least one further axis, **characterized in that** the tool-guide unit (14a; 14b; 14c) is mounted such that it can be pivoted about a pivot axis (50a; 50b; 50c) which runs at least essentially perpendicular to a bearing surface (22a; 22b; 22c) of the workpiece-bearing unit (12a; 12b; 12c).

2. Machine-tool system according to Claim 1,
**characterized in that** the machine-tool severing device, in at least one operating state, is mounted such that it can be displaced at least essentially parallel to the bearing surface (22a; 22b; 22c) of the workpiece-bearing unit (12a; 12b; 12c).

3. Machine-tool system according to one of the preceding claims,
**characterized in that** the machine-tool severing device, in at least one operating state, is mounted such that it can be pivoted relative to the workpiece-bearing unit (12a; 12b; 12c).

4. Machine-tool system according to one of the preceding claims,
**characterized in that** the machine-tool severing device is mounted such that it can be pivoted relative to the tool-guide unit (14b; 14c).

5. Machine-tool system according to one of the preceding claims,
**characterized by** a further machine-tool severing device, which has at least one cutting strand (26b) and at least one guide unit (28b), for guiding the cutting strand.

6. Machine-tool system according to Claim 5,
**characterized in that** the machine-tool severing devices can be driven in opposite directions by means of a drive unit (66b) of the machine tool.

7. Machine-tool system according to one of the preceding claims,
**characterized in that** the workpiece-bearing unit (12a; 12b; 12c) is designed such that it can be pulled out at least on one side (60a, 62a; 60b, 62b; 60c, 62c).

## Revendications

1. Système de machine-outil avec au moins une machine-outil, en particulier une scie à onglet, qui présente au moins une unité de dépôt de pièce (12a; 12b; 12c) pour le dépôt d'une pièce pendant un usinage et au moins une unité de guidage d'outil (14a; 14b; 14c) montée de façon mobile, et avec au moins un dispositif de séparation de machine-outil disposé sur l'unité de guidage d'outil (14a; 14b; 14c), dans lequel le dispositif de séparation de machine-outil présente au moins une chaîne de coupe (18a; 18b; 18c) et au moins une unité de guidage (20a; 20b; 20c) pour le guidage de la chaîne de coupe (18a; 18b; 18c), dans lequel l'unité de guidage d'outil (14a; 14b; 14c) est montée de façon mobile linéairement le long d'au moins un axe (156b, 156c) et/ou en plus de façon pivotante autour d'au moins un autre axe, **caractérisé en ce que** l'unité de guidage d'outil (14a; 14b; 14c) est montée de façon pivotante autour d'un axe de pivotement (50a; 50b; 50c) s'étendant au moins essentiellement de façon perpendiculaire à une face de dépôt (22a; 22b; 22c) de l'unité de dépôt de pièce (12a; 12b; 12c).

2. Système de machine-outil selon la revendication 1, **caractérisé en ce que** le système de séparation de machine-outil est monté, dans au moins un état de fonctionnement, de façon déplaçable au moins essentiellement parallèlement à la face de dépôt (22a; 22b; 22c) de l'unité de dépôt de pièce (12a; 12b; 12c).

3. Système de machine-outil selon l'une quelconque des revendications précédentes, **caractérisé en ce que** le dispositif de séparation de machine-outil est monté de façon pivotante par rapport à l'unité de dépôt de pièce (12a; 12b; 12c) au moins dans un état de fonctionnement.

4. Système de machine-outil selon l'une quelconque des revendications précédentes, **caractérisé en ce que** le dispositif de séparation de machine-outil est monté de façon pivotante par rapport à l'unité de guidage d'outil (14b; 14c).

5. Système de machine-outil selon l'une quelconque des revendications précédentes, **caractérisé par** un autre dispositif de séparation de machine-outil, qui présente au moins une chaîne de coupe (26b) et au moins une unité de guidage (28b) pour le guidage de la chaîne de coupe.

6. Système de machine-outil selon la revendication 5, **caractérisé en ce que** les dispositifs de séparation de machine-outil peuvent être entraînés en sens contraires au moyen d'une unité d'entraînement (66b) de la machine-outil.

7. Système de machine-outil selon l'une quelconque des revendications précédentes, **caractérisé en ce que** l'unité de dépôt de pièce (12a; 12b; 12c) est réalisée sous forme extractible au moins sur un côté (60a, 62a; 60b, 62b; 60c, 62c).
